Europäisches Patentamt

European Patent Office

Office européen des brevets

(19)

(11) Veröffentlichungsnummer : **0 185 884 B2**

(12) # NEUE EUROPÄISCHE PATENTSCHRIFT

(45) Veröffentlichungstag der neuen Patentschrift :
**07.10.92 Patentblatt 92/41**

(51) Int. Cl.$^5$ : **G01B 7/06**

(21) Anmeldenummer : **85113564.0**

(22) Anmeldetag : **25.10.85**

(54) **Verfahren für die kontinuierliche, kontaktlose Schichtdickenbestimmung sowie Anordnung zur Durchführung des Verfahrens.**

(30) Priorität : **03.11.84 DE 3440197**

(43) Veröffentlichungstag der Anmeldung :
**02.07.86 Patentblatt 86/27**

(45) Bekanntmachung des Hinweises auf die
Patenterteilung :
**19.07.89 Patentblatt 89/29**

(45) Bekanntmachung des Hinweises auf die
Entscheidung über den Einspruch :
**07.10.92 Patentblatt 92/41**

(84) Benannte Vertragsstaaten :
**BE DE FR GB IT NL**

(56) Entgegenhaltungen :
**EP-A- 0 098 509**
**DE-A- 1 813 333**

(56) Entgegenhaltungen :
**DE-A- 2 362 835**
**GB-A- 2 091 872**
**US-A- 2 856 582**
**US-A- 3 523 246**
**US-A- 3 535 631**
**ADHÄSION, Nr. 6, 1980, Seiten 183-185, Stutt-**
**gart, DE; DR. U. ZORLL: "Messsysteme für die**
**kontinuierlicheSchichtdickenbestimmung"**

(73) Patentinhaber : **HOECHST**
**AKTIENGESELLSCHAFT**
**Postfach 80 03 20**
**W-6230 Frankfurt am Main 80 (DE)**

(72) Erfinder : **Reuter, Klaus**
**Stiegelstrasse 11**
**W-6200 Wiesbaden-Kloppenheim (DE)**
Erfinder : **Lingnau, Jürgen, Dr.**
**Karolingerstrasse 10**
**W-6500 Mainz 43 (DE)**

EP 0 185 884 B2

**Beschreibung**

Die Erfindung betrifft ein Verfahren und eine Anordnung für die kontinuierliche, kontaktfreie Schichtdickenmessung einer auf einer Unterlage befindlichen Schicht.

Aus der US-A 2,856,582 ist ein Verfahren und eine Vorrichtung zur Anzeige der Dicke eines isolierenden Materials bekannt, das sich unter einer Anzahl von Ladungselektroden vorbeibewegt, durch die Strom hindurchfließt und eine entsprechende Anzahl von elektrischen Ladungslinien auf dem Material ausbildet. Bei diesem bekannten Verfahren wird die Differenz zwischen dem Gesamtstromfluß durch die Elektroden und dem Strom gemessen, der durch die Elektroden infolge von Fehlstellen in dem isolierenden Material fließt. Dazu ist jede Elektrode einer ersten Elektrodenstruktur über einen Widerstand mit einem Leiter verbunden, der mit positiver Spannung von einem Spannungsteiler versorgt wird, der mit einer Hochspannungsversorgungsquelle verbunden ist. Der ersten Elektrodenstruktur liegt eine Gegenelektrode gegenüber, die nicht auf Masse liegt, sondern über einen Widerstand mit dem negativen Spannungsende des Spannungsteilers verbunden ist, so daß eine einseitig gerichtete Spannung über den Spalt zwischen der Elektrodenstruktur und der Gegenelektrode auftritt. Wenn das zu messende isolierende Material an der ersten Elektrodenstruktur vorbeibewegt wird, werden elektrische Ladungen in einer Anzahl von Linien entlang dem Material ausgebildet, die das Fließen des Ladestroms durch den Stromkreis bewirken, der den Leiter, Widerstände, die einzelnen Elektroden der ersten Elektrodenstruktur, die Gegenelektrode und den Widerstand umfaßt, der mit dem Spannungsteiler verbunden ist. Die Höhe der über diesen Widerstand entwickelten Spannung steht in Beziehung zu der Dicke des zu messenden Materials. Bei diesem Verfahren und der Vorrichtung erfolgt keine Messung der Höhe der Aufladespannung durch ein elektrostatisches Voltmeter, das sich beispielsweise oberhalb des zu messenden Materials befindet.

In der EP-A 0 098 509 sind ein Verfahren zum Steuern eines elektrostatischen Feldes und eine Vorrichtung zum Steuern der elektrostatischen Ladung einer fotoleitenden Oberfläche beschrieben. Der Fotoleiter wird aufgeladen, in bestimmten Bereichen belichtet und betonert. Die elektrostatische Ladung der Fotoleiteroberfläche wird detektiert und in Beziehung zu der Bewegung des Fotoleiters gesetzt. Die festgestellten Ladungswerte für die belichteten und unbelichteten Bereiche werden mit einem vorgegebenen Signal verglichen, um ein Vergleichssignal für Kontrastzwecke zu erhalten. Das vorgegebene Signal umfaßt sowohl die gewünschten elektrostatischen Ladungswerte als auch die Kennlinie einer bestimmten Belichtungsquelle. Das jeweilig gemessene Signal und das vorgegebene Signal werden miteinander verglichen und aus dem Vergleich Steuersignale gewonnen, um den Ausgangspegel der Korona, die Belichtungsintensität und die Dauer der Belichtung zu steuern. Die elektrostatische Ladung auf dem Fotoleiter wird mittels eines Elektrometers gemessen. Eine Dickenmessung dar Fotoleiterschicht ist bei diesem Verfahren nicht vorgesehen.

In der Zeitschrift « Adhäsion » 1980, Heft 6, Seiten 183 bis 185 sind Meßsysteme für die kontinuierliche Schichtdickenbestimmung, insbesondere für zunächst in flüssigem Zustand aufgetragene Lack- und Klebstoffmaterialien, beschrieben. Eine Zusammenstellung derjenigen Meßprinzipien, die den verschiedenen, in der Praxis bereits bewährten Dickenmeßverfahren zugrunde liegen, findet sich beispielsweise in den DIN-VORSCHRIFTEN 50 982, Teil 2, Mai 1978. Physikalische Effekte, die für die kontinuierliche und berührungslose Dickenmeßmethode der Materialschichtdicke geeignet sind, sind entweder optischer oder elektrischer Art oder auch solche, die mit der Wechselwirkung von energiereicher Strahlung, im allgemeinen radioaktiver Strahlung, und Materie zusammenhängen. Bei dem Effekt elektrischer Art, der in Geräten für Schichtdickenbestimmungen benutzt wird, liegt der Schichtdickenmessung eine Kapazitätsbestimmung zugrunde. Dabei muß der Schichtträger, auf dem die Schicht aufgetragen ist, elektrisch leitend sein, d. h. im allgemeinen ein metallischer Schichtträger sein, der als die eine Elektrode an das Meßsystem angeschlossen wird. Zusammen mit einer zweiten Elektrode, der eigentlichen Meßelektrode, bildet dann der Schichtträger ein Plattenkondensatorsystem, das in seiner Flächenausdehnung groß gegenüber dem Abstand der beiden Elektroden ist. Dieses in der DIN-Vorschrift 50985 beschriebene Verfahren hat auch eine kontaktlose Variante, bei der sich die eigentliche Meßelektrode möglichst dicht über der Oberfläche der zu messenden Schicht befindet. Der Abstand zwischen der Meßelektrode und der Oberfläche der zu vermessenden Schicht muß dabei so groß gewählt werden, daß auch bei Schwankungen in der Dicke der zu messenden Schicht die Meßelektrode auf keinen Fall mit der Schichtoberfläche in Berührung kommen kann.

Aus dem Abstand a zwischen den beiden Elektroden und der Fläche F der Meßelektrode läßt sich die Kapazität $C_0$ des Meßkondensators nach der Beziehung $C_0 = \varepsilon_0 \cdot F/a$ bestimmen, wenn sich die zu messende Schicht noch nicht zwischen den Elektroden befindet. Die Dielektrizitätskonstante $\varepsilon_r$ der zu messenden Schicht muß vorab durch ein geeignetes elektrisches Meßverfahren bestimmt werden. Die Schichtdicke d ergibt sich dann gemäß der Formel

$$d = \frac{\varepsilon_r}{\varepsilon_r - 1} \cdot \left(1 - \frac{C_0}{C}\right) \cdot a \, ,$$

wenn die durch diese Plattenkondensatoranordnung gebildete Kapazität C fortlaufend gemessen wird, so daß hierdurch die gewünschte ständige Dickenkontrolle der auf einem Metallband unter der Meßelektrode hindurchgeführten Schicht möglich ist. Mit einer derartigen Anordnung wird im wesentlichen ein über die Flächenausdehnung der Meßelektrode gemittelter Durchschnittswert der Schichtdicke bestimmt.

Aus der US-A-4 451 732 ist ein Meßsystem, bestehend aus einer Strahlungsquelle radioaktiver Isotope und einem Geiger-Müller-Zählrohr als Detektor bekannt, mit dem die Schichtdicke einer kontinuierlich bewegten Materialbahn gemessen wird. Von dem Detektor wird beispielsweise die von der Materialbahn zurückgestrahlte ß-Strahlung bestimmt, deren Stärke von der Schichtdicke der Materialbahn abhängt.

In der DE-A-32 27 025 ist eine Vorrichtung zur Ermittlung des Flächengewichtes oder der Dicke einer auf eine sich bewegende Materialbahn aufgebrachten Beschichtung beschrieben, bei der eine Walze mit einem Teil ihres Umfangs in das Beschichtungsmittel eintaucht und dieses auf eine Verteilerwalze oder die Materialbahn überträgt. Der Behälter mit dem Beschichtungsmittel ist über die Breite der Materialbahn in einzelne Behälterteile unterteilt und die Menge an Beschichtungsmittel, die jeweils aus dem einzelnen Behälterteil verbraucht wird, wird einzeln gemessen und die dem gemessenen Beschichtungsmittelverbrauch je Zeiteinheit entsprechenden Meßwerte werden einem Rechner zugeführt. Der Rechner steuert einen Regelkreis, über den die Beschichtungsdicke bzw. das Flächengewicht der Beschichtung auf einen konstanten Wert geregelt wird, wobei dem einzelnen Behälterteil die aufgrund der Messung notwendige Beschichtungsmittelmenge, unabhängig von den übrigen Behälterteilen zugeführt wird.

Bei der bekannten kapazitiven Meßmethode ist von Nachteil, daß sie in starkem Maß von dem Abstand der Meßelektrode von der Oberfläche der zu messenden Schicht abhängig ist. Dieser Abstand soll einerseits möglichst klein sein, andererseits aber groß genug, um eine Berührung zwischen der Schicht und der Meßelektrode im Falle von zu großen Schichtdickenschwankungen auszuschließen. Es kann mit dieser Meßmethode die Dicke von sehr dünnen Schichten wegen fehlender Empfindlichkeit des Verfahrens nur sehr ungenau bestimmt werden. Darüber hinaus ermöglicht es diese Methode nicht, die Schichtdicke von Materialien zu bestimmen, die nicht rein dielektrisch sind, sondern auch noch eine bestimmte Dunkel- und Helligkeitsleitfähigkeit besitzen.

Aufgabe der Erfindung ist es, zur Schichtdickenbestimmung von Materialien ein Meßverfahren sowie eine Anordnung zur Durchführung dieses Verfahrens zu schaffen, die weitgehend unabhängig vom Abstand der Meßeinrichtung von der Schichtoberfläche sind und nicht nur die Messung rein dielektrischer Schichten bzw. Materialien, sondern auch von Schichten ermöglichen, die bestimmte Leitfähigkeitseigenschaften besitzen.

Diese Aufgabe wird erfindungsgemäß durch ein Verfahren gelöst, das sich dadurch auszeichnet, daß die Oberfläche der Schicht mittels einer Koronaentladung berührungsfrei aufgeladen wird, daß die auf die Oberfläche applizierte Ladungsmenge während der Aufladung konstantgehalten wird, daß eine Aufladungsspannung, die durch die aufgebrachte Ladungsmenge erzeugt wird, gemessen wird und daß die Schichtdicke aufgrund einer Linearbeziehung zwischen Schichtdicke und Aufladungsspannung bestimmt wird.

Zur Aufladung der Schicht wird eine Korona verwendet, die eine gleichmäßige Aufladung ermöglicht. Dies kann durch eine Korona ohne oder mit Schirm, ohne oder mit Gitter, mit Drähten oder mit Nadeln erreicht werden. Als Versorgung kann eine Gleichspannung dienen, es kann jedoch auch eine gleichspannungsüberlagerte Wechselspannung oder eine gepulste Gleichspannung zur Anwendung kommen. Zweckmäßig wegen der Reproduzierbarkeit wird eine Gleichspannungskorona verwendet, deren Aufladestrom konstant gehalten wird.

In Ausführung das Verfahrens besteht die Schicht aus einem dielektrischen oder fotoleitfähigen Material, das auf einem metallischen Schichtträger aufgebracht ist. Die Aufladung kann entweder bei noch lösungsfeuchter Schicht erfolgen oder nach dem Trocknen der Schicht.

In weiterer Ausgetaltung des Verfahrens wird die Schicht von einer Kunststoff-Folie gebildet, die dann über eine elektrisch leitfähige Auflage bewegt wird. Wenn es sich bei der Schicht um ein fotoleitfähiges Material handelt, wie beispielsweise die Beschichtung von elektrofotografischen Druckplatten oder um organische Fotoleiterschichten, so kann die Höhe der Aufladungsspannung der bewegten Schicht nach einer definierten Belichtung auch zum Beurteilen der Lichtempfindlichkeit herangezogen werden.

Das Verfahren ist auch anwendbar, wenn die Schicht während der Aufladung nicht bewegt wird und stattdessen das Aufladungsfeld mit gleichmäßiger Geschwindigkeit über die stationäre Schicht geführt wird, wie dies beispielsweise der Fall ist, wenn die Dicke einer Lackschicht auf einem stillstehenden Blechteil, wie beispielsweise einem Autodach, gemessen werden soll.

Die Anordnung für die kontinuierliche, kontaktfreie Schichtdickenmessung einer auf einer Unterlage befindlichen Schicht zeichnet sich durch die im Anspruch 16 genannten Merkmale aus.

In Ausgestaltung der Anordnung umfaßt eine Meßeinrichtung die Korona, eine Lichtquelle, das elektrostatische Voltmeter, eine Hochspannungsquelle für die Korona, eine Spannungsquelle, die über ein Amperemeter mit der Lichtquelle verbunden ist, und eine Spannungsversorgung des Voltmeters, wobei die Lichtquelle zwischen der Korona und dem elektrostatischen Voltmeter angebracht und so gebaut und angeordnet ist, daß sie Licht in einem festgelegten Wellenbereich aussendet und ein vorgegebenes Belichtungsfeld mit einer bestimmten Intensität ausleuchtet, und steht die Meßeinrichtung unter leichtem Überdruck von Preßluft oder einem Schutzgas.

In einer weiteren Ausgestaltung der Anordnung umfaßt eine Meßeinrichtung die Korona, das elektrostatische Voltmeter, eine Lichtquelle, die die Höhe der Aufladungsspannung auf der Schicht im Falle einer fotoleitfähigen Schicht absenkt und eine weiteres elektrostatisches Voltmeter, und sind die Lichtquelle vor dem Voltmeter und sowohl Lichtquelle als auch Voltmeter in Transportrichtung der Schicht nach dem anderen Voltmeter angeordnet.

Die Erfindung wird im folgenden anhand der Zeichnungen näher erläutert.

Es zeigen :

Fig. 1 eine schematische Seitenansicht der Meßanordnung über der zu messenden Schicht,

Fig. 2 eine Draufsicht auf die Meßanordnung ähnlich Fig. 1 einschließlich einer Lichtquelle und Versorgungseinheiten für die Meßeinrichtung,

Fig. 3 eine schematische Seitenansicht einer Meßanordnung für zwei Meßstellen,

Fig. 4 schematisch eine Verarbeitungslinie mit einer Meßanordnung für fotoleitfähige Schichten,

Fig. 5 ein Diagramm des Zusammenhangs zwischen der Hochspannung einer Gleichspannungskorona und der Aufladespannung der Schichtoberfläche,

Fig. 6 ein Diagramm des Aufladestromes der Korona in Abhängigkeit von der Koronaspannung bei unterschiedlichen Atmosphären,

Fig. 7 ein Diagramm des Zusammenhangs zwischen Schichtgewicht und der Sättigungsspannung der Schichtoberfläche, und

Fig. 8 schematisch den Verlauf der Aufladungsspannung einer fotoleitfähigen Schicht in Abhängigkeit vom Transportweg der Schicht am Beispiel der Meßeinrichtung aus Fig. 3.

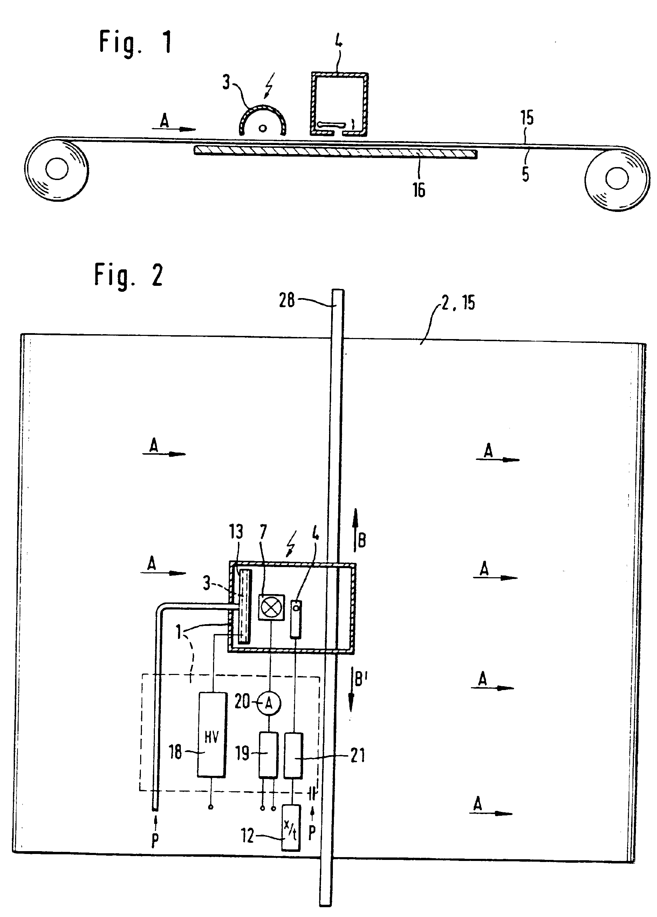

Anhand der Fig. 1 und 2 wird die prinzipielle Meßanordnung zur Bestimmung der Schichtdicke erläutert. In Fig. 1 läuft eine dielektrische Schicht 15, beispielsweise eine Kunststoff-Folie, von einer Vorratsrolle in Transportrichtung A zu einer Aufwickelrolle. Die Transportbahn 5, entlang der die Schicht 15 läuft, führt über eine elektrisch leitende Auflage 16, die in nicht dargestellter Weise elektrisch mit Masse verbunden ist und die Gegenelektrode zu einer Korona 3 bildet, welche die Oberfläche der Schicht 15, mit einem konstanten Ladestrom auflädt. In Transportrichtung A gesehen ist ein elektrostatisches Voltmeter 4 als Meßsonde nachgeschaltet, das die jeweilige Aufladungsspannung der Schichtoberfläche mißt. Die Korona 3 wird beispielsweise mit einer Gleichspannung von rund 8 kV betrieben und weist entweder einen Koronadraht oder Koronaspitzen auf. Der Abstand des Koronadrahts bzw. der Koronaspitzen von der Schichtoberfläche liegt im Bereich von 5 bis 20 mm, bevorzugt beträgt dieser Abstand etwa 12 mm. Die Meßsonde bzw. das erste elektrostatische Voltmeter 4 ist mit seiner Meßfläche 0,5 bis 4 mm von der Schichtoberfläche entfernt. Die Bahngeschwindigkeit beträgt beispielsweise 8 m/min., jedoch sind auch wesentlich höhere Bahngeschwindigkeiten möglich.

Bei dem elektrostatischen Voltmeter 4 zur Bestimmung der Aufladungsspannung der Schichtoberfläche handelt es sich um ein bekanntes Gerät, das in der Unterseite, die der zu messenden Schicht zugewandt ist, ein Meßfenster für eine Meßelektrode aufweist. Eine Schwinggabel im Metallgehäuse des Voltmeters wird über einen frequenzmäßig abstimmbaren Antrieb von einem Oszillator in mechanische Schwingungen versetzt und ist elektrisch mit dem Metallgehäuse verbunden. Die aufeinander zu- und voneinander wegschwingenden Arme der Schwinggabel arbeiten als Zerhacker, der das Meßfenster periodisch öffnet und schließt. Die von der Aufladungsspannung bzw. dem Oberflächenpotential der Schicht ausgehenden elektrischen Kraftlinien verlaufen durch das Meßfenster hindurch auf die Meßelektrode und werden durch die hin- und hergehenden Arme der Schwinggabel, die sich quer zu den Kraftlinien bewegen, unterbrochen. Dadurch wird eine zerhackte Wechselspannung in der Meßelektrode induziert, deren Potential solange hochgeregelt wird, bis die Wechselsspannungsamplitude ein Minimum erreicht. Damit ist das elektrische Feld zwischen Sonde und Schicht kompensiert und das Sondenpotential entspricht der Aufladespannung. Weitere Einzelheiten eines derartigen elektrostatischen Voltmeters sind beispielsweise in der DE-A-34 09 701.5 beschrieben.

Fig. 2 zeigt eine schematische Draufsicht auf die Meßanordnung ähnlich Fig. 1 unter Einschluß der Versorgungseinheiten. Die Korona 3, die Lichtquelle 7 und die Meßsonde bzw. das elektrostatische Voltmeter 4 sind in einem gemeinsamen Gehäuse untergebracht, das nach unten hin in Richtung einer fotoleitfähigen und-/oder dielektrischen Schicht 2 auf einem leitfähigen Trägermaterial 14 bzw. einer Schicht 15 in Gestalt einer Kunststoff-Folie, mit getrennter elektrisch leitender Auflage 16, offen ist. In das Innere einer Koronaabschirmung 13 wird über eine Druckleitung und eine Druckeinrichtung, beispielsweise einen Druckregler, Preßluft oder ein Schutzgas mit geringem Überdruck eingeleitet. Bei dem Schutzgas kann es sich zum Beispiel um Helium, Neon, Argon oder auch Stickstoff handeln. Das Schutzgas bzw. die Preßluft dient zum Einsatz der Meßeinrichtung an explosionsgefährdeten Stellen und unterdrückt die Zündung explosiver Gase durch Koronaentladung. Das Schutzgas dient auch der Steigerung der Koronaeffektivität und bietet dadurch den Vorteil der kontinuierlichen Schichtdickenmessung auch bei höheren Produktionsgeschwindigkeiten. Ein weiterer Vorteil liegt in der Vermeidung bzw. Verhinderung der Ozonbildung.

Die Korona 3 weist eine Abschirmung 13 aus isolierendem Material auf und wird mit einer Gleichspannung von 4 bis 12 kV betrieben. Die Höhe des Spannungspegels wird bestimmt durch den gewünschten Ladestrom und kann mit einem Konstantstromnetzteil automatisch nachgeregelt werden.

Bei der Lichtquelle 7, die über ein Amperemeter 20 mit einer Spannungsquelle 19 verbunden ist, kann es sich um eine Halogenlampe, eine Gasentladungslampe oder um lichtemittierende Dioden handeln, die Licht in einem definierten Wellenlängenbereich aussenden und ein vorgegebenes Belichtungsfeld mit einer bestimmten Intensität ausleuchten. Bewährt hat sich eine Halogenleuchte, in deren Austrittsfenster Interferenz- und Graufilter einsetzbar sind. Damit läßt sich die Intensität und der Wellenlängenbereich dem jeweiligen Fotoleiter anpassen.

Das elektrostatische Voltmeter 4 ist über eine Spannungsversorgung 21 mit einem x/t-Schreiber 12 verbunden, der in Abhängigkeit von der Zeit bzw. dem Transportweg der Schicht 2 oder 15 die von dem Voltmeter 4 gemessene Aufladungsspannung der Schichtoberfläche aufzeichnet. Hier kann natürlich auch eine andere Ausgabeeinheit sinnvoll sein, wie z. B. eine Voltmeteranzeige, eine CRT-Röhre oder ein Analog-Digitalwandler für Computerauswertung. Sämtliche Versorgungseinheiten, die in Fig. 2 durch eine gestrichelte Linie zusammengefaßt sind, bilden zusammen mit den in einem Gehäuse untergebrachten Einheiten, wie der Korona 3, der Lichtquelle 7 und dem Voltmeter 4, zusammen die Meßeinrichtung 1. Die Versorgungseinheiten können an eine nichtgezeigte Druckluftquelle angeschlossen sein, die beispielsweise die Versorgungseinheiten mit geringem Überdruck beaufschlagt. Die Versorgungseinheiten können mit den übrigen Einheiten der Meßeinrichtung 1 zusammengefaßt werden oder auch getrennt von diesen Einheiten außerhalb des Bereichs der Transportbahn der Schicht 2 oder 15 angeordnet sein. Das Gehäuse mit der Korona 3, der Lichtquelle 7 und dem elektrostatischen Voltmeter 4 ist entlang einer Führungsschiene 28 in Richtung des Pfeils B oder B' quer zur Transportrichtung A verschiebbar.

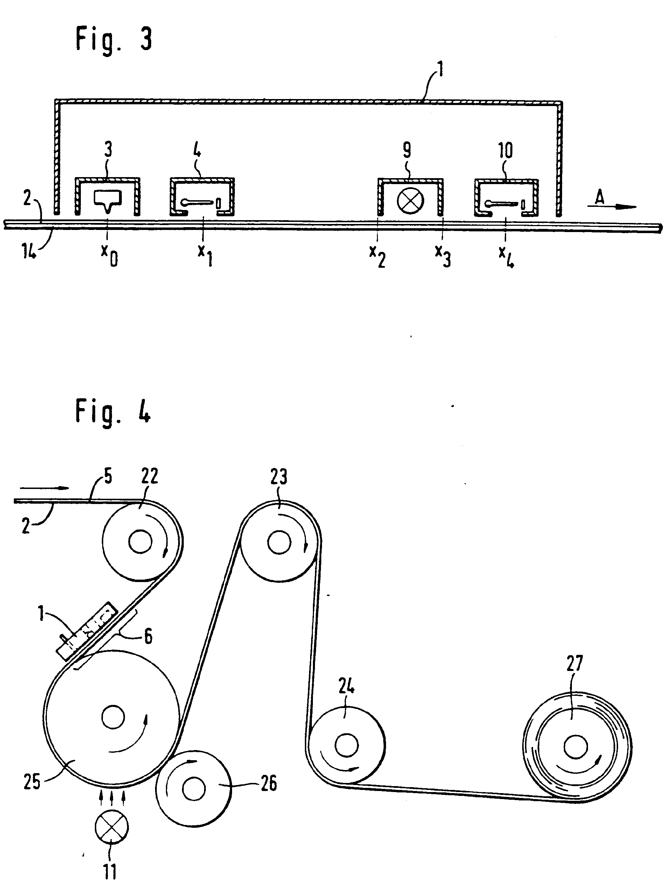

Die schematische Seitenansicht einer Meßanordnung für zwei Meßstellen nach Fig. 3 zeigt die Korona 3, der ein erstes elektrostatisches Voltmeter 4 unmittelbar folgt. In einem Abstand, der von der Dunkelleitfähigkeit der Schicht abhängt, ist eine schaltbare Lichtquelle 9 angeordnet, an die ein zweites elektrostatisches Voltmeter 10 unmittelbar anschließt. Diese Baueinheiten schließt ein gemeinsames Gehäuse des Meßeinrichtung 1 ein. Eine derartige Meßanordnung ist vor allem zum Bestimmen der Schichtdicke dielektrischer Schichten vorgesehen, die eine gewisse Dunkelleitfähigkeit besitzen, die sich dadurch bemerkbar macht, daß die Aufladungsspannung der Schichtoberfläche durch Entladung durch die Schicht 2, die auf dem metallischen Schichtträger 14 aufgebracht ist, exponentiell abnimmt.

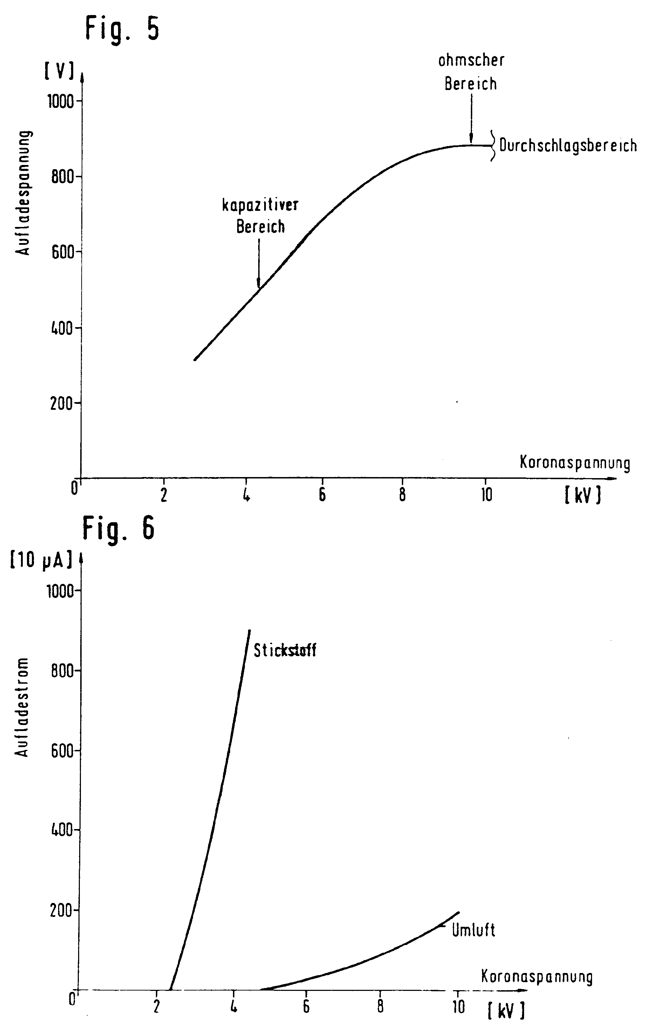

In Fig. 4 ist schematisch eine Herstellungslinie für Druckplatten dargestellt, die aus einem Aluminiumschichtträger, auf den die fotoleitfähige Schicht 2 aufgebracht ist, gefertigt werden. Die Transportbahn 5 verläuft von einem nichtgezeigten Trockenkanal über eine Umlenkrolle 22 und eine Antriebswalze 25, sowie weitere Umlenkrollen 23 und 24 zu einer Aufwickelrolle 27. Um eine einfache Montage der Meßeinrichtung 1 bei möglichst geringer Vibration des Aluminiumschichtträgers zu erreichen, wird die Meßeinrichtung 1 über einer planaren Stelle 6 nahe der Antriebswalze 25 befestigt. Im Bereich der Antriebswalze 25 ist in Transportrichtung gesehen nach der Meßeinrichtung 1 eine Entladungslampe 11 angeordnet, die beispielsweise die elektrofotografische Schicht 2 auf dem Aluminiumschichtträger mit einer Bestrahlung von ca. 150 $\mu$J/cm$^2$ bei einer Bahngeschwindigkeit von 8 m/min. entlädt. Eine leitfähige Quetschrolle 26, die an der Antriebswalze 25 anliegt, kann die gleiche Aufgabe bei nicht lichtempfindlichen Schichten übernehmen. Es ist auch möglich, obwohl dies nicht dargestellt ist, die Meßeinrichtung 1 vor dem Trockenkanal für den beschichteten Aluminiumschichtträger anzuordnen und die Schichtdickenmessung somit für die noch feuchte, Lösungsmittel enthaltende Schicht vorzunehmen. Die Trocknung geschieht dann in einem nachfolgenden Trockenkanal.

Im folgenden werden anhand der Fig. 5 bis 8 die physikalischen Zusammenhänge zwischen der Schichtdicke und der Aufladungsspannung der Schichtoberfläche, die mittels der Korona erfolgt, erläutert.

Wird die auf eine Spannung U aufgeladene Schicht als ein Kondensator mit der Kapazität C betrachtet, so gilt für die auf die Schicht aufgebrachte Ladungsmenge

$$Q = C \cdot U = I \cdot t \quad (1)$$

mit der Stromstärke I des Aufladestroms der Korona und der Einwirkungszeit t des Aufladestroms. Des weiteren folgt dann

$$C = \frac{I \cdot t}{U} = \varepsilon_0 \frac{\varepsilon_r \cdot A}{d} \quad (2)$$

mit der Fläche A der aufgeladenen Schicht, der Schichtdicke d und den Dielektrizitätskonstanten $\varepsilon_r$ des Schichtmaterials und $\varepsilon_0$ der Luft.

Aus Gleichung (1) und (2) ist

$$d = U \frac{\varepsilon_0 \cdot \varepsilon_r \cdot A}{I \cdot t} \quad (3)$$

und mit der in der Einwirkungszeit t unter der Korona vorbei transportierten Schichtfläche

$$A = x \cdot v \cdot t \quad (4)$$

folgt

$$d = U \frac{\varepsilon_0 \cdot \varepsilon_r \cdot x \cdot v}{I}, \quad (5)$$

mit der Sprühlänge x der Korona und der Relativgeschwindigkeit v der Schicht zur Meßeinrichtung.

Aus (5) ergibt sich die Proportionalität zwischen der Schichtdicke d und der Aufladungsspannung U der Schicht, da die übrigen Größen, wie $\varepsilon_0$, $\varepsilon_r$ Materialkonstanten, x eine festvorgegebene geometrische Größe und v und I konstant gehaltene Betriebsgrößen sind.

Bei Schichten mit hinreichend hoher Eigenleitfähigkeit ist es auch möglich, aus der Höhe der Sättigungsaufladung auf das Schichtgewicht rückzuschließen. Auch in diesem Fall besteht eine direkte Proportionalität zwischen der Aufladungsspannung U und der Schichtdicke d, wobei der Proportionalitätsfaktor den spezifischen Widerstand der Schicht enthält. .

Fig. 5 zeigt schematisch den Zusammenhang zwischen der Aufladespannung auf der Schichtoberfläche in Volt und der Hochspannung der Korona in kV. Für das Meßbeispiel liegt der kapazitive Bereich für die Messung der Aufladungsspannung bei einer Gleichspannung der Korona zwischen 2, 3 bis knapp über 8 kV. Danach beginnt der ohm'sche Bereich, in welchem die Aufladungsspannung konstant bleibt, unabhängig von der weiter ansteigenden Spannung der Korona (Sättigungsbereich). Ab einer Spannung von ca. 10 kV der Korona beginnt der Durchschlagsbereich der Schicht.

Fig. 6 gibt den Aufladestrom als Funktion der Koronaspannung an. Dabei zeigt es sich, daß der Aufladestrom eine starke Abhängigkeit von der Art des im Koronabereich befindlichen Gases zeigt. Bei einer Schutzgasatmorphäre aus Stickstoff fließt ein viel höherer Aufladestrom als bei ungespülter Korona. Dies ermöglicht eine rasche Aufladung der Schichtoberfläche und läßt bei sonst gleichem Koronaaufbau wesentlich höhere Bandgeschwindigkeiten zu. Eine ähnliche Wirkung zeigt sich auch mit anderen Schutzgasen, wie Argon und Helium, bei Preßluft oder reinem Sauerstoff zeigt sich keine Erhöhung des Aufladestromes.

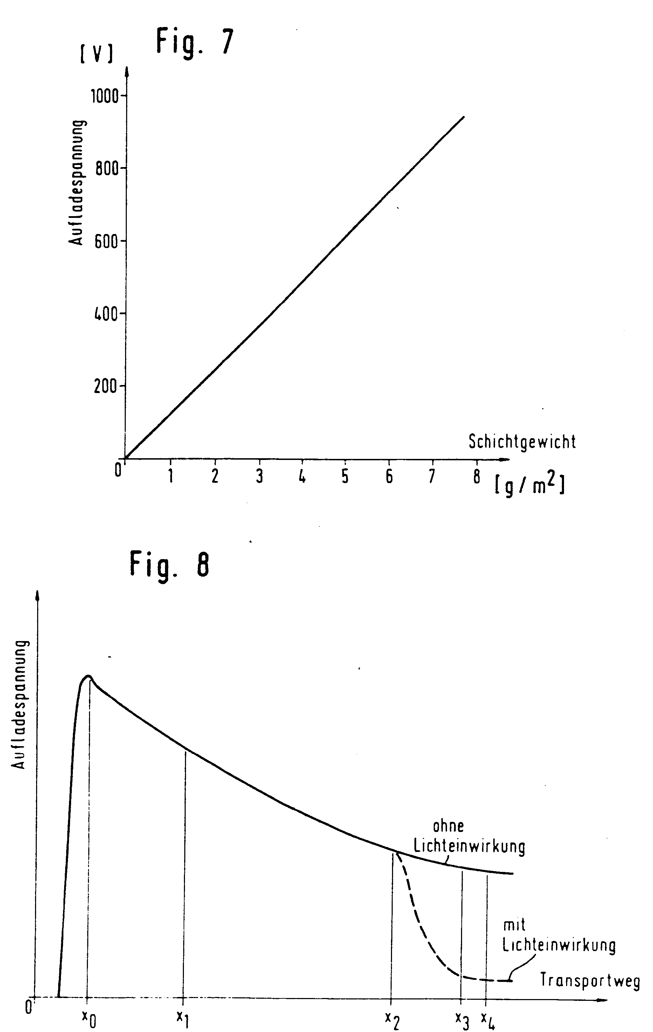

Wird in Fig. 7 über dem Schichtgewicht in $g/m^2$ die Sättigungsspannung in kV aufgetragen, so ergibt sich in guter Näherung ein linearer Zusammenhang zwischen den beiden Größen, wobei für ein Schichtgewicht von 1 $g/m^2$ mit einer Sättigungsspannung von 120 V zu rechnen ist. Dabei ist es unwesentlich, ob sich die Schicht aus einer oder mehreren Lagen zusammensetzt.

Fig. 8 zeigt den Verlauf der Aufladungsspannung über den Transportweg, den der Schichtträger 14 mit der fotoleitfähigen Schicht 2 gemäß der Anordnung nach Fig. 3 zurücklegt. An der Stelle $x_0$ erfolgt die Aufladung der Schicht 2 durch die Korona 3 und an der Stelle $x_1$ die erste Messung durch das erste elektrostatische Voltmeter 4. In einem Abstand von 3 bis 4 m von dem Voltmeter 4 ist ein zweites elektrostatisches Voltmeter 10 angeordnet, das die Aufladungshöhe nach einer definierten Zeit mißt.

Da der exponentielle Abfall während der Entladung einer leitfähigen Schicht bekannt ist, kann aus den Werten der Aufladungsspannungen an der ersten und zweiten Meßstelle auf die Größe der Sättigungsspannung extrapoliert werden und somit gemäß dem linearen Zusammenhang nach Fig. 7 zwischen der Sättigungsspannung und dem Schichtgewicht das letztere und somit auch die Schichtdicke bestimmt werden.

Handelt es sich um eine fotoleitfähige Schicht und ist die Lichtquelle 9 eingeschaltet, so sinkt die Aufladungsspannung durch die Ausleuchtung zwischen $x_2$ und $x_3$ um einen Betrag, der eine Aussage über die Lichtempfindlichkeit, z. B. der E/2-Wert ermöglicht. Bei dem E/2-Wert handelt es sich um die Bestrahlung in $J/m^2$ bzw. $\mu J/cm^2$, die gebraucht wird, um einen Fotoleiter bzw. eine fotoleitfähige Schicht von der Anfangsaufladungsspannung auf den halben Wert der Aufladungsspannung zu entladen. Aus der Spannungsdifferenz der belichteten und unbelichteten Stellen des Fotoleiters bzw. einer fotoleitfähigen Schicht läßt sich bei Kenntnis der Bestrahlung und der Annahme, daß der Spannungsabfall exponentiell verläuft, der E/2-Wert für die Fotoleiterschicht bestimmen.

## Patentansprüche

1. Verfahren für die kontinuierliche, kontaktfreie Schichtdickenmessung einer auf einer Unterlage befindlichen Schicht, dadurch gekennzeichnet, daß die Oberfläche der Schicht mittels einer Koronaentladung berührungsfrei aufgeladen wird, daß die auf die Oberfläche applizierte Ladungsmenge während der Aufladung konstant gehalten wird, daß eine Aufladungsspannung, die durch die aufgebrachte Ladungsmenge erzeugt wird, gemessen wird und daß die Schichtdicke aufgrund einer Linearbeziehung zwischen Schichtdicke und Aufladungsspannung bestimmt wird.

2. Verfahren nach Anspruch 1, dadurch gekennzeichnet, daß auf die Schicht eine Ladungsmenge appliziert wird, die durch ein Wechselspannungsfeld erzeugt wird.

3. Verfahren nach Anspruch 1, dadurch gekennzeichnet, daß auf die Schicht eine Ladungsmenge appliziert wird, die durch ein Gleichspannungsfeld erzeugt wird.

4. Verfahren nach Anspruch 1, dadurch gekennzeichnet, daß auf die Schicht eine Ladungsmenge appliziert wird, die durch ein gepulstes Spannungsfeld erzeugt wird.

5. Verfahren nach den Ansprüchen 2 bis 4, dadurch gekennzeichnet, daß die Ladungsmenge durch ein Wechselspannungsfeld mit überlagertem gepulsten Gleichspannungsfeld erzeugt wird.

6. Verfahren nach den Ansprüchen 1 bis 5, dadurch gekennzeichnet, daß die Aufladung der Schicht in einer Schutzgasatmosphäre erfolgt.

7. Verfahren nach den Ansprüchen 1 bis 6, dadurch gekennzeichnet, daß die Schicht während der Aufladung mit gleichmäßiger Geschwindigkeit bewegt wird.

8. Verfahren nach den Ansprüchen 1 bis 7, dadurch gekennzeichnet, daß die Schicht aus einem dielektrischen oder fotoleitfähigen Material gebildet wird, das auf einem metallischen Schichtträger aufgebracht ist.

9. Verfahren nach den Ansprüchen 1 bis 8, dadurch gekennzeichnet, daß die noch lösungsfeuchte Schicht aufgeladen wird.

10. Verfahren nach den Ansprüchen 1 bis 8, dadurch gekennzeichnet, daß die Schichte nach dem Trocknen aufgeladen wird.

11. Verfahren nach den Ansprüchen 1 bis 7, dadurch gekennzeichnet, daß die Schicht von einer Kunststoff-Folie gebildet wird, die über eine elektrisch leitfähige Auflage bewegt wird.

12. Verfahren nach den Ansprüchen 1 bis 5, dadurch gekennzeichnet, daß die Höhe der Aufladungsspannung der bewegten Schicht an zwei Stellen gemessen wird, die in Bewegungsrichtung der Schicht voneinander beabstandet sind.

13. Verfahren nach den Ansprüchen 1 bis 5, dadurch gekennzeichnet, daß die Schicht während der Aufladung nicht bewegt wird und daß das Aufladungsfeld mit gleichmäßiger Geschwindigkeit über die stationäre Schicht geführt wird.

14. Verfahren nach den Anspruch 6, dadurch gekennzeichnet, daß die Aufladung der Schicht im proportionalen Bereich der Kurve Aufladungsspannung der Schicht-Spannung des ladungserzeugenden Feldes erfolgt.

15. Verfahren nach den Anspruch 6, dadurch gekennzeichnet daß die Aufladung der Schicht bis zur Sättigung erfolgt.

16. Anordnung für die kontinuierliche, kontaktfreie Schichtdickenmessung einer auf einer Unterlage befindlichen Schicht, dadurch gekennzeichnet, daß eine Korona (3) zur Aufladung der Oberfläche der Schicht (15; 2) mit einem konstanten Ladestrom und zur Erzeugung einer Aufladungsspannung auf der Schicht vorgesehen ist, daß ein elektrostatisches Voltmeter (4) als Meßsonde für die Aufladungsspannung in Transportrichtung der Schicht nach der Korona (3) angeordnet ist, und daß eine Einrichtung (12) das Ausgangssignal des Voltmeters empfängt und die Schichtdicke aufgrund einer Linearbeziehung zwischen Schichtdicke und Aufladungsspannung bestimmt.

17. Anordnung nach Anspruch 16, dadurch gekennzeichnet, daß eine Meßeinrichtung (1) die Korona (3), eine Lichtquelle (7), das elektrostatische Voltmeter (4), eine Hochspannungsquelle (18) für die Korona, eine Spannungsquelle (19), die über ein Ampèremeter (20) mit der Lichtquelle (7) verbunden ist, und eine Spannungsversorgung (21) des Voltmeters (4) umfaßt, daß die Lichtquelle (7) zwischen der Korona und dem Voltmeter angebrach und so gebaut und angeordnet ist, daß sie Licht in einem festgelegten Welenlängenbereich aussendet und ein vorgegebenes Belichtungsfeld mit einer bestimmten Intensität ausleuchtet, und daß die Meßeinrichtung (1) unter leichtem Überdruck von Preßluft oder einem Schutzgas steht.

18. Anordnung nach Anspruch 16, dadurch gekennzeichnet, daß eine Meßeinrichtung (1) die Korona (3), das elektrostatische Voltmeter (4), eine Lichtquelle (9), die die Höhe der Aufladungsspannung auf der Schicht im Falle einer fotoleitfähigen Schicht absenkt, und ein weiteres elektrostatisches Voltmeter (10) umfaßt und daß die Lichtquelle (9) vor dem weiteren Voltmeter (10) und sowohl Lichtquelle als auch weiteres Voltmeter in Transportrichtung der Schicht nach dem ersten Voltmeter (4) angeordnet sind.

19. Anordnung nach den Ansprüchen 17 oder 18, dadurch gekennzeichnet, daß nach der Meßeinrichtung (1) in Transportrichtung der Schicht eine Entladungslampe (11) oder eine leitfähige Walze (26) angeordnet ist.

20. Anordnung nach Ansprüchen 17 bis 19, dadurch gekennzeichnet, daß die Meßeinrichtung (1) beweglich angeordnet ist.

21. Anordnung nach Anspruch 17 oder 18, dadurch gekennzeichnet, daß eine Abschirmung (13) der Korona (3) aus einem dielektrischen Material besteht und daß der Eingangsstrom der Korona stabilisiert ist bzw. die Differenz zwischen dem in die Koronaeinrichtung fließenden Strom und dem Strom von der Korona zu der Abschirmung (13) stabilisiert ist.

22. Anordnung nach Anspruch 16 oder 17, dadurch gekennzeichnet, daß die Schicht (2) ein dielektrisches oder fotoleitfähiges Material ist, das auf einem metallischen Schichtträger (14) angetragen ist, der sich unter der Meßeinrichtung (1) vorbeibewegt.

23. Anordnung nach Anspruch 16 oder 17, dadurch gekennzeichnet, daß die Schicht (15) eine Kunststoff-Folie ist, die sich über eine elektrisch leitende Auflage (16) bewegt.

24. Anordnung nach Ansprüchen 17 bis 23, dadurch gekennzeichnet, daß eine Vielzahl von Meßeinrichtungen (1) parallel zueinander angeordnet sind.

## Claims

1. Process for the continuous, contact-free measurement of the thickness of a layer applied to a support, wherein the surface of the layer is charged in a contact-free manner by means of a corona discharge, the charge quantity applied to the surface is kept constant during charging, a charging voltage is measured, which is generated by the applied charge quantity, and the layer thickness is determined as a function of a linear relation existing between layer thickness and charging voltage.

2. Process as claimed in Claim 1, wherein a charge quantity, by which an alternating current filed is generated, is applied to the layer.

3. Process as claimed in Claim 1, wherein a charge quantity, by which a direct current field is generated, is applied to the layer.

4. Process as claimed in Claim 1, wherein a charge quantity, by which a pulsed current field is generated, is applied to the layer.

5. Process as claimed in Claims 2 to 4, wherein the charge quantity is generated by an alternating current field with a super-imposed pulsed direct current field.

6. Process as claimed in Claims 1 to 5, wherein charging of the layer is performed in a protective gas atmosphere.

7. Process as claimed in Claims 1 to 6, wherein the layer is moved a constant speed during charging.

8. Process as claimed in Claims 1 to 7, wherein the layer is constituted by a dielectric or photoconductive material applied to a metallic support.

9. Process as claimed in Claims 1 to 8, wherein the layer is charged while still being wet with solvent.

10. Process as claimed in Claims 1 to 8, wherein the layer is charged after drying.

11. Process as claimed in Claims 1 to 7, wherein the layer is constituted by a plastic film conveyed along an electrically conductive support.

12. Process as claimed in Claims 1 to 5, wherein the layer of the charging voltage of the moving layer is measured at two points located at a distance from one another, in the direction of transport.

13. Process as claimed in Claims 1 to 5, wherein the layer does not move during charging and the charging field is moved over the stationary layer at a constant speed.

14. Process as claimed in Claim 6, wherein charging is performed in the proportional range of the curve charging voltage of the layer voltage of the charge-generating field.

15. Process as claimed in Claim 6, wherein the layer is charged up to the point of saturation.

16. Arrangement for performing the continuous, contact-free measurement of the thickness of a layer applied to a support, wherein a corona (3) is provided for charging the surface of the layer (15 ; 2) with a constant charging current and for generating a charging voltage on the layer, wherein an electrostatic voltmeter (4) serving as a measuring probe for the charging voltage is provided following the corona seen in the direction of transport of the layer, and wherein the output signal of the voltmeter is received by a device (12) by which the layer thickness is determined as a function of a linear relation existing between layer thickness and charging voltage.

17. Arrangement as claimed in Claim 16, wherein a measuring arrangement (1) comprises corona (3), a light source (7), the electrostatic voltmeter (4), a high-voltage source (18) for the corona, a voltage source (19) connected to the light source (7) via an amperemeter (20) and a voltage supply (21) for the voltmeter, wherein the light source (7) is located between the corona and the voltmeter and designed and arranged such that it emits light within a predetermined wavelengh region and illuminates a predetermined field of illumination with a predetermined intensity, and wherein a slight overpressure is applied to the measuring arrangement (1) by means of compressed air or a protective gas.

18. Arrangement as claimed in Claim 16, wherein a measuring arrangement (1) comprises the corona (3), the electrostatic voltmeter (4), a light source (9), by which the level of the charging voltage of the layer is reduced when the latter is a photoconductive layer, and a further electrostatic voltmeter (10), and wherein the light source (9) is arranged ahead of the further voltmeter (10) and both the light source and the further voltmeter are arranged following the first voltmeter (4), seen in the direction of transport of the layer.

19. Arrangement as claimed in Claims 17 or 18, wherein a discharge lamp (11) or a conductive roll (26) is installed after the measuring arrangement (1), in the direction of transport.

20. Arrangement as claimed in Claims 17 to 19, wherein the measuring arrangement (1) is movably installed.

21. Arrangement as claimed in Claim 17 or 18, wherein a screen (13) of the corona (3) is made of a dielectric material and the input current of the corona is stabilized or the difference between the current flowing into the corona device and the current flowing from the corona to the shield (13), respectively, is stabilized.

22. Arrangement as claimed in Claim 16 or 17, wherein the layer (2) comprises a dielectric or photoconductive material which is applied to a metallic support (14) moving below the measuring arrangement (1).

23. Arrangement as claimed in Claim 16 or 17, wherein the layer (15) is a plastic film moving over a electrically conductive support (16).

24. Arrangement as claimed in Claims 17 to 23, wherein a plurality of measuring arrangements (1) are arranged in parallel.

## Revendications

1. Procédé pour mesurer de façon continue et sans contact l'épaisseur d'une couche située sur un support, caracterisé en ce qu'on charge, sans contact, à l'aide d'une décharge à effet couronne, la surface de la couche, qu'on maintient constante la quantité de charges, appliquée à la surface, pendant la charge, qu'on mesure une tension de charge, produite par la quantité de charges appliquée et qu'on détermine l'épaisseur de la couche sur la base d'une relation linéaire entre cette épaisseur et la tension de charge.

2. Procédé selon la revendication 1, caractérisé en ce qu'on applique à la couche une quantité de charges, produite au moyen d'un champ de tension alternative.

3. Procédé selon la revendication 1, caractérisé en ce qu'on applique à la couche une quantité de charges, produite au moyen d'un champ de tension continue.

4. Procédé selon la revendication 1, caractérisé en ce qu'on applique à la couche une quantité de charges, produite au moyen d'un champ pulsé de tension.

5. Procédé selon les revendications 1 à 4, caractérisé en ce que la quantité de charges est produite au moyen d'un champ de tension alternative, auquel est superposé un champ pulsé de tension continue.

6. Procédé selon les revendications 1 à 5, caractérisé en ce que l'application de la charge à la couche est réalisée dans une atmosphère de gaz protecteur.

7. Procédé selon les revendications 1 à 6, caractérisé en ce que la couche est déplacée à une vitesse uniforme pendant l'application de la charge.

8. Procédé selon les revendications 1 à 7, caractérisé en ce que la couche est formée à partir d'un matériau diélectrique ou photoconducteur, que l'on dépose sur un support métallique de la couche.

9. Procédé selon les revendications 1 à 8, caractérisé en ce qu'on applique la charge à la couche encore humidifiée par la solution.

10. Procédé selon les revendications 1 à 8, caractérisé en ce qu'on applique la charge à la couche après le séchage.

11. Procédé selon les revendications 1 à 7, caractérisé en ce que la couche est formée avec une feuille de matière plastique, qu'on déplace sur un support électriquement conducteur.

12. Procédé selon les revendications 1 à 5, caractérisé en ce qu'on mesure l'amplitude de la tension de charge de la couche mobile, en deux points distants l'un de l'autre dans la direction de déplacement de la couche.

13. Procédé selon les revendications 1 à 5, caractérisé en ce qu'on ne déplace pas la couche pendant l'application de la charge et qu'on déplace le champ de l'application de la charge à une vitesse uniforme au-dessus de la couche fixe.

14. Procédé selon la revendication 6, caractérisé en ce que l'application de la charge à la couche est exécutée dans la zone de proportionnalité de la couche tension de charge de la couche tension du champ produisant la charge.

15. Procédé selon la revendication 6, caractérisé en ce qu'on charge la couche jusqu'à la saturation.

16. Dispositif pour mesurer en continu et sans contact l'épaisseur d'une couche située sur un support, caractérisé en ce qu'il est prévu une unité à effet couronne (3) servant à charger la surface de la couche (15; 2) avec un courant de charge constant et à produire une tension de charge sur la couche, qu'un voltmètre électrostatique (4) est disposé en tant que sonde de mesure de la tension de charge, en aval d'une unité à effet couronne (3) dans la direction de déplacement de la couche, et qu'un dispositif (12) reçoit le signal de sortie du voltmètre et détermine l'épaisseur de la couche sur la base d'une relation linéaire entre l'épaisseur de la couche et la tension de charge.

17. Dispositif selon la revendication 16, caractérisé en ce qu'un dispositif de mesure (1) inclut l'unité à effet couronne (3), une source de lumière (7), le voltmètre électrostatique (4), une source de haute tension (18) pour l'unité à effet couronne, une source de tension (19) reliée à la source de lumière (7) par l'intermédiaire d'un ampèremètre (20), et une unité d'alimentation en tension (21) du voltmètre (4), que la source de lumière (7) est insérée entre l'unité à effet couronne et le voltmètre et est constituée et disposée de manière à émettre une lumière dans une gamme fixée de longueurs d'onde et à éclairer un champ prédéterminé d'exposition avec une intensité déterminée, et que le dispositif de mesure (1) est soumis à une légère surpression d'air comprimé ou d'un gaz protecteur.

18. Dispositif selon la revendication 16, caractérisé en ce qu'un dispositif de mesure (1) contient l'unité à effet couronne (3), le voltmètre électrostatique (4), une source de lumière (9) qui réduit l'amplitude de la tension de charge sur la couche dans le cas d'une couche photoconductrice, et un autre voltmètre électrostatique (10), et que la source de lumière (9) est disposée en amont de l'autre voltmètre (10), et qu'aussi bien la source de lumière que l'autre voltmètre sont disposés en aval du premier voltmètre (4), dans la direction de déplacement de la couche.

19. Dispositif selon la revendication 17 ou 18, caractérisé en ce qu'une lampe à décharge (11 ) ou un cylindre conducteur (26) est disposé en aval du dispositif de mesure (1), dans la direction de déplacement de la couche.

20. Dispositif selon les revendications 17 à 19, caractérisé en ce que le dispositif de mesure (1) est mobile.

21. Dispositif selon la revendication 17 ou 18, caractérisé en ce qu'un écran (13) de l'unité à effet couronne (3) est réalisé en un matériau diélectrique, et que le courant d'entrée de l'unité à effet couronne est stabilisé ou que la différence entre le courant circulant dans l'unité à effet couronne et le courant circulant depuis l'unité à effet couronne en direction de l'écran (13) est stabilisé.

22. Dispositif selon la revendication 16 ou 17, caractérisé en ce que la couche (2) est réalisée en un matériau diélectrique ou photoconducteur, supporté par un support métallique (14) se déplaçant au-dessous du dispositif de mesure (1).

23. Dispositif selon la revendication 16 ou 17, caractérisé en ce que la couche (15) est une feuille de matière plastique, qui se déplace au-dessus d'un support électriquement conducteur (16).

24. Dispositif selon les revendications 17 à 23, caractérisé en ce qu'une multiplicité de dispositifs de mesure (1) sont installés en parallèle.

# Fig. 1

# Fig. 2

## Fig. 3

## Fig. 4

# Fig. 5

# Fig. 6

14

## Fig. 7

## Fig. 8

15